(19) **Europäisches Patentamt**
**European Patent Office**
**Office européen des brevets**

(11) **EP 3 322 087 B1**

(12) **EUROPEAN PATENT SPECIFICATION**

(45) Date of publication and mention
of the grant of the patent:
**21.05.2025 Bulletin 2025/21**

(21) Application number: **15898223.1**

(22) Date of filing: **10.07.2015**

(51) International Patent Classification (IPC):
*H02P 29/00* (2016.01)   *H02P 6/15* (2016.01)
*H02P 29/024* (2016.01)   *H02P 23/26* (2016.01)

(52) Cooperative Patent Classification (CPC):
**H02P 6/15; H02P 23/26; H02P 29/00;**
**H02P 29/0241**

(86) International application number:
**PCT/JP2015/069948**

(87) International publication number:
**WO 2017/009907 (19.01.2017 Gazette 2017/03)**

(54) **MOTOR CONTROL DEVICE, COMPRESSOR, AND AIR CONDITIONER**

MOTORSTEUERUNGSVORRICHTUNG, VERDICHTER UND KLIMAANLAGE

DISPOSITIF DE COMMANDE DE MOTEUR, COMPRESSEUR, ET CLIMATISEUR

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**16.05.2018 Bulletin 2018/20**

(73) Proprietor: **Mitsubishi Electric Corporation**
**Chiyoda-ku**
**Tokyo 100-8310 (JP)**

(72) Inventors:
• **TSUMURA, Akihiro**
**Tokyo 100-8310 (JP)**
• **KUSUBE, Shinsaku**
**Tokyo 100-8310 (JP)**

• **IWATA, Akihiko**
**Tokyo 100-8310 (JP)**
• **YUASA, Kenta**
**Tokyo 100-8310 (JP)**

(74) Representative: **Pfenning, Meinig & Partner mbB**
**Patent- und Rechtsanwälte**
**Joachimsthaler Straße 10-12**
**10719 Berlin (DE)**

(56) References cited:
EP-A1- 1 662 650   EP-A2- 1 959 559
EP-A2- 2 490 328   WO-A1-2008/026270
JP-A- 2001 169 597   JP-A- 2005 059 786
JP-A- 2005 312 217   JP-A- 2011 200 067
JP-A- 2012 107 859   JP-A- 2013 204 935
US-A1- 2014 084 825

**Description**

Technical Field

The present invention relates to a motor control device, a compressor, and an air-conditioning apparatus that incorporate a function of controlling driving of various motors.

Background Art

There exists a conventional air-conditioning apparatus equipped with an inverter circuit that switches on and off at certain intervals a direct-current voltage output from a rectifying circuit and converts the direct-current voltage into an alternating-current voltage to variably control a speed of a motor in a compressor installed into an air-conditioning apparatus or other apparatuses. Because achieving high efficiency is considered important for a motor in a compressor that is incorporated into an air-conditioning apparatus, a motor having a rare earth permanent magnet disposed inside a rotor (hereinafter referred to as a permanent magnet synchronous motor) is commonly used as a motor in a compressor.
It has been proposed that a magnetic-pole position of a permanent magnet in a rotor is detected with a position sensor, for example, and a rotation speed of a permanent magnet synchronous motor is controlled on the basis of the magnetic-pole phase at which a current is detected. It has also been proposed that, for example, a rotation speed of a permanent magnet synchronous motor is controlled without using a magnetic-flux sensor (hereinafter referred to as position-sensorless control), (refer to Patent Literature 1, for example). The position-sensorless control disclosed in Patent Literature 1 is used, for example, in a situation in which the interior of a compressor in an air-conditioning apparatus is under a high-temperature and high-pressure condition that is unsuitable for installing a magnetic-flux sensor into the compressor.
Patent Literature 2 discloses a motor protection system in conjunction with a controller monitoring the performance of redundant motor-driven prime movers having a lead prime mover and a lag prime mover. The controller uses motor protection measurements to determine if the lead motor-driven prime mover is in distress and activates operation of the lag motor-driven prime mover when lead prime mover is in distress.
In Patent Literature 3 a method for checking out-of-step of a synchronous motor is described in which electric degrees of the synchronous motor re detected and compared to each other to obtain a comparing result. It is determined that the synchronous motor is out of step when the comparing result satisfies a preset requirement.

Citation List

Patent Literature

Patent Literature 1: Japanese Unexamined Patent Application Publication No. 2003-259680
Patent Literature 2: EP 2 490 328 A2
Patent Literature 3: US 2014/0084825 A1

Summary of Invention

Technical Problem

In a conventional air-conditioning apparatus, however, when a compressor suctions liquefied refrigerant, load torque of a motor changes rapidly and exceeds a limit that the motor can provide. This leads to a phenomenon of losing synchronization (hereinafter referred to as "out of synchronization"), and the apparatus comes to an abnormal stop.
A motor that is controlled by the position-sensorless control disclosed in Patent Literature 1 is also likely to go out of synchronization because a magnetic-pole position of a rotor is not directly detected. Liquefied refrigerant is usually stored in an accumulator, and a compressor does not suction the liquefied refrigerant. However, in the event that an amount of the liquefied refrigerant delivered to the accumulator exceeds an allowable limit for the liquefied refrigerant to be stored in the accumulator during operation such as defrosting operation of a heat exchanger of an outdoor unit, the compressor may suction the liquefied refrigerant. As a result, the load torque may change rapidly, and the motor may go out of synchronization.
In view of the foregoing, the present invention provides a motor control device, a compressor, and an air-conditioning apparatus that enable operation to continue by avoiding an out-of-synchronization state of a motor in the case of increased load torque of the motor.

Solution to Problem

The problem is solved by the features of the independent claims.

A motor control device of an embodiment of the present invention is a motor control device controlling a motor, and the motor control device includes a load-torque detecting unit configured to detect load torque of the motor and a current correcting unit configured to control a current flowing through the motor in accordance with information detected by the load-torque detecting unit. The current correcting unit increases the current flowing through the motor in accordance with an increase in the load torque detected by the load-torque detecting unit.

A compressor of an embodiment of the present invention includes the motor controlled by the motor control device of the embodiment of the present invention.

An air-conditioning apparatus of an embodiment of the present invention includes the compressor of the embodiment of the present invention, a current detecting unit configured to detect a current of the motor, and an overcurrent protecting unit configured to stop the motor control device when the current detected by the current detecting unit is larger than or equal to a reference current.

Advantageous Effects of Invention

According to the embodiments of the present invention, the current correcting unit enables the motor to continuously operate by avoiding going out of synchronization in the case of increased load torque of the motor because the current correcting unit increases the current flowing through the motor in accordance with an increase in the load torque detected by the load-torque detecting unit.

Brief Description of Drawings

[Fig. 1] Fig. 1 is a schematic diagram illustrating a circuit configuration and a control block diagram of an air-conditioning apparatus 100 and a motor control device 200 of an Example useful to explain the present invention.
[Fig. 2] Fig. 2 is a vector diagram of a configuration of magnetic-flux vector control by the motor control device 200 of the Example.
[Fig. 3] Fig. 3 is a conceptual diagram illustrating an example of determination of a threshold for a load-torque detecting unit 26 in the motor control device 200 of the Example.
[Fig. 4] Fig. 4 is a schematic diagram illustrating a circuit configuration and a control block diagram of an air-conditioning apparatus 100 and a motor control device 200 of the Embodiment of the present invention.
[Fig. 5] Fig. 5 is a vector diagram of a configuration of magnetic-flux vector control by the motor control device 200 of the Embodiment of the present invention.
[Fig. 6] Fig. 6 illustrates motor currents and root-mean-square values of the motor currents under a normal operating condition of the motor control device 200 of the Embodiment of the present invention.
[Fig. 7] Fig. 7 illustrates motor currents and root-mean-square values of the motor currents under a motor-locking condition of the motor control device 200 of the Embodiment of the present invention.
[Fig. 8] Fig. 8 illustrates motor currents and root-mean-square values of the motor currents under a motor-open-phase condition of the motor control device 200 of the Embodiment of the present invention.

Description of the Embodiment

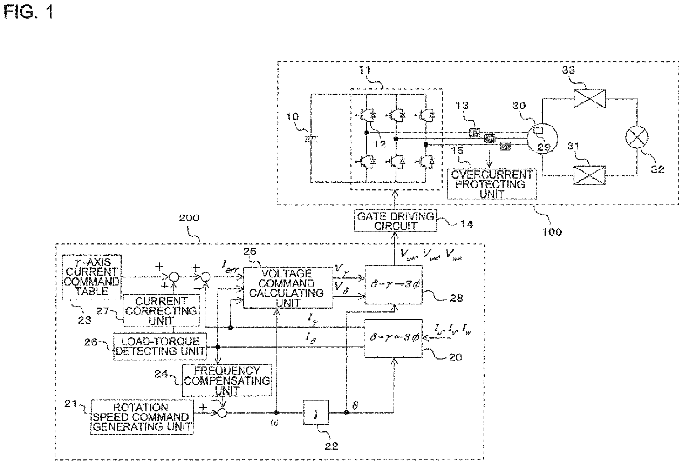

Hereinafter, an embodiment of the present invention will be described with reference to the drawings. The same numerals or symbols refer to the same items or equivalents thereof in the following drawings including Fig. 1, and the same numerals or symbols are used in the entire description of the embodiments below.

Example

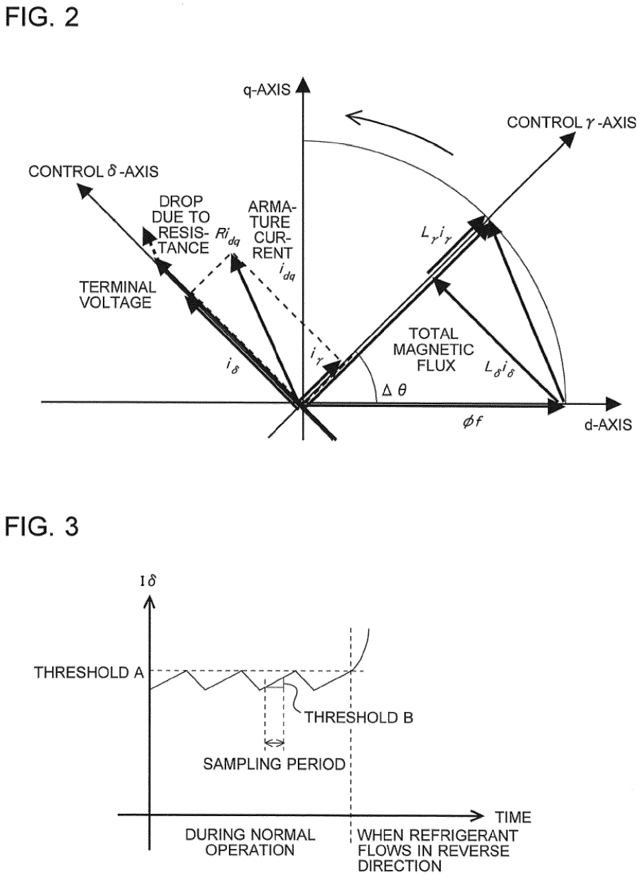

Fig. 1 is a schematic diagram illustrating a circuit configuration and a control block diagram of an air-conditioning apparatus 100 and a motor control device 200 of an Example useful to explain the present invention. Fig. 2 is a vector diagram of a configuration of magnetic-flux vector control by the motor control device 200 of the Example useful to explain the present invention.

Referring to Fig. 1, the air-conditioning apparatus 100 includes a smoothing capacitor 10, an inverter circuit 11, a current detecting unit 13, a gate driving circuit 14, an overcurrent protecting unit 15, a compressor 29 having a motor 30, a condenser 31, a pressure reducing unit 32, and an evaporator 33. The air-conditioning apparatus 100 obtains a direct-current voltage that is input to the inverter circuit 11 by performing AC-DC conversion on a voltage from an alternating-current power source. The alternating-current power is converted into direct-current power by a circuit such as a diode bridge circuit.

The smoothing capacitor 10 smooths ripples in the voltage after rectification. The inverter circuit 11 converts a direct-current voltage smoothed by the smoothing capacitor 10 into an alternating-current voltage and drives the motor 30. The inverter circuit 11 includes six switching devices 12 and six return-current diodes, and a reverse current (return current) flows through each of the return-current diodes when a corresponding one of the switching devices 12 is turned off. Each of the switching devices 12 has a semiconductor device such as an IGBT (Insulated Gate Bipolar Transistor). The switching devices 12 of the inverter circuit 11 are each composed of a device made of silicon carbide, gallium nitride or related materials, or diamond, for example. An output line of the inverter 11 is connected to the motor 30 and the current detecting unit 13 is disposed on the output line of the inverter circuit 11.

The current detecting unit 13, for example, detects all phases of three-phase currents flowing through the motor 30 and outputs a voltage or current signal in accordance with a current flowing through the output line of the inverter circuit 11. The current detecting unit 13 includes, for example, a current sensor that detects the current flowing through the motor 30. An instantaneous current value of the motor 30 detected by the current detecting unit 13 is digitized and read into a microcomputer, for example.

The current detecting unit 13 may detect two-phase currents flowing through the motor 30 and derive a remaining one-phase current by summing the instantaneous values of the detected two-phase currents followed by multiplying the sum by -1. Alternatively, the current detecting unit 13 may generally be any of those that detect a magnetic flux in accordance with a current flow and convert the magnetic flux into a voltage, as long as a device such as a Hall element is incorporated therein.

The overcurrent protecting unit 15 has a function of protecting the inverter circuit 11 by causing the air-conditioning apparatus 100 to temporarily stop operating when the current detected by the current detecting unit 13 exceeds a predetermined reference current. For the motor 30 composed of a permanent magnet synchronous motor, when a current larger than or equal to a certain level flows through a stator winding, a phenomenon called demagnetization, which weakens a magnetic flux of a permanent magnet in a rotor, occurs. Further, for the motor 30 composed of a permanent magnet synchronous motor, when a current larger than or equal to a certain level flows through a stator winding, a loss increases in the IGBT in the inverter circuit 11.

Thus, the reference current is determined, for example, in accordance with a demagnetization level of the motor 30 from the viewpoint of reducing or eliminating the aforementioned phenomenon called demagnetization. The reference current is also determined, for example, from the viewpoint of preventing the loss in the IGBT in the inverter circuit 11 from increasing. The overcurrent protecting unit 15 causes the air-conditioning apparatus 100 to temporarily stop operating, for example, when one of the aforementioned reference currents, whichever is smaller, is exceeded.

The overcurrent protecting unit 15 is constructed using hardware components such as an electronic circuit or configured to perform software protection in which a current detection signal is input to a microcomputer, for example, which performs a digital conversion process. If the overcurrent protecting unit 15 is configured to perform the software protection, the overcurrent protecting unit 15 allows greater design flexibility because the threshold can be changed freely and a variety of calculation processes can be performed.

The compressor 29 is a variable capacity compressor that compresses suctioned refrigerant and converts the refrigerant into high-temperature and high-pressure refrigerant, which is discharged from the compressor 29. The compressor 29 includes the motor 30. The motor 30 is constructed using a motor having a structure that incorporates a permanent magnet into a rotor (permanent magnet synchronous motor), which has a high energy-saving capacity, for example. The condenser 31 is a heat exchanger that condenses and liquefies the refrigerant discharged from the compressor 29.

The refrigerant condensed and liquefied in the condenser 31 expands under a reduced pressure in the pressure reducing unit 32. The evaporator 33 evaporates and gasifies the refrigerant flowing from the pressure reducing unit 32. The compressor 29, the condenser 31, the pressure reducing unit 32, and the evaporator 33 are connected in succession by using refrigerant pipes and constitute a refrigeration cycle apparatus.

Referring to Fig. 1, the motor control device 200 includes a coordinate conversion unit 20, a rotation speed command generating unit 21, an integrating unit 22, a $\gamma$-axis current command table 23, a frequency compensating unit 24, a voltage command calculating unit 25, a load-torque detecting unit 26, a current correcting unit 27, and an inverse coordinate conversion unit 28.

The motor control device 200 controls the gate driving circuit 14 so that the motor 30 is controlled to obtain a required rotation speed in response to a current detected by the current detecting unit 13. When a voltage is applied between the gate and emitter terminals of the IGBT in response to a signal output from the gate driving circuit 14, continuity between the collector and the emitter of the IGBT is established and a voltage is applied to the motor 30.

In the case that the motor 30 is constructed using a permanent magnet synchronous motor, for example, the motor control device 200 detects a magnetic-pole phase of the permanent magnet by using a device such as a magnetic-flux sensor and controls the current on the basis of the magnetic-pole phase. However, installing a magnetic-flux sensor into a place that is under a high-temperature and high-pressure condition, such as the interior of the motor 30, is not easy, and thus the air-conditioning apparatus 100 usually performs position-sensorless control without using a position sensor. In the Example , a magnetic-flux vector control method, in which an output voltage is controlled so that a primary magnetic flux generated in the motor is maintained at a constant value on a fixed axis, will be described in the following as an example of the position-sensorless control of the permanent magnet synchronous motor.

The coordinate conversion unit 20 converts three-phase alternating currents flowing through the motor 30 detected by the current detecting unit 13 into a direct current on the basis of a phase θ that synchronizes with a rotation speed of the motor. The coordinate conversion unit 20 outputs, on the basis of the phase θ, an excitation component current Iγ, which generates a magnetic flux that emerges in the motor 30, and a torque component current Iδ, which is orthogonal to the excitation component current Iγ and contributes to a torque component of the motor 30. As illustrated in Fig. 2, the direction of the magnetic flux of the permanent magnet of the motor 30 is designated as the d-axis, and the axis orthogonal to the d-axis is designated as the q-axis. The γ- and δ-axes used for the present magnetic-flux vector control operate by generating control axes that differ from the d- and q-axes by an angle of Δθ.

The rotation speed command generating unit 21 performs a calculation of a command value for the rotation speed of the motor 30 so that the air-conditioning apparatus 100 obtains a required refrigeration capacity. The rotation speed command generating unit 21 also performs a calculation so that the rotation speed of the motor 30 increases in a situation such as requiring a larger refrigeration capacity, for example, cooling operation under a high-temperature outdoor-air condition. The rotation speed command generating unit 21 includes a microcomputer, for example. The rotation speed command generating unit 21 may control not only the rotation speed of the motor 30 but also a rotation speed of a motor of a fan and various actuators including an opening degree of an expansion valve in the pressure reducing unit 32.

Hereinafter, a method to obtain the phase θ rotating with the γ- and δ-axes, which is used for the coordinate conversion, will be described.

As indicated by Expression (1), it is known that the rotation speed of the motor changes in proportion to a frequency f of a sinusoidal voltage applied to the motor.

[Math. 1]

$$N \ [min^{-1}] = 120 \times f/p \qquad (1)$$

Here, N represents the number of rotations of the motor per minute, expressed in $[min^{-1}]$. f represents a frequency of the voltage applied to the motor, that is, the frequency [Hz] of the three-phase alternating-current voltage generated by the inverter circuit 11 in the case of the Example. p represents the number of magnetic poles of the motor 30 (hereinafter referred to as the number of poles).

As indicated by Expression (1), the rotation speed of the motor is proportional to the frequency of the inverter output voltage and inversely proportional to the number of poles. This indicates that the rotation speed of the motor can be controlled by controlling the frequency of the inverter output voltage. The motor control device 200 controls the inverter circuit 11 so as to generate a voltage having a frequency proportional to the command value for the rotation speed generated by the rotation speed command generating unit 21.

Here, one characteristic of the magnetic-flux vector control is that the phase θ, which synchronizes with the rotation speed of the motor 30, is obtained by integrating with respect to time an electric angular velocity that is derived from the aforementioned command value of the rotation speed command generating unit 21. Then, in the Example, the final phase θ can be obtained by using the frequency compensating unit 24 described below so that the motor 30 rotates with further stability.

Next, detailed operation of the frequency compensating unit 24 will be described. The frequency compensating unit 24 has a role of compensating the angular velocity ω so that the motor 30 can follow the phase with stability with respect to the command value for the rotation speed described above even when load torque changes.

For example, in the case that a discharge pressure of the compressor 29 increases resulting in an increase in the load torque of the motor 30, while the aforementioned torque component current Iδ also increases similarly, the instantaneous magnetic-pole phase of the motor 30 is actually delayed. Then, the frequency compensating unit 24 performs negative-feedback control using a value proportional to the torque component current Iδ to compensate the frequency so that the phase of the γ- and δ- axes, which are the control axes, is delayed to match the actual magnetic-pole position. In this way, the motor 30 can be operated with stable rotation without losing track of the magnetic-pole position and going out of synchronization.

Furthermore, for example, in the case that the discharge pressure of the compressor 29 decreases resulting in a decrease in the load torque of the motor 30, the phase of the magnetic-pole position of the motor 30 advances. Then, because the amount of frequency compensation also decreases, the phase of the primary magnetic flux Φ of the motor 30, which is controlled in accordance with the $\gamma$- and $\delta$-axes, also advances, enabling the motor 30 to rotate with stability without losing track of the magnetic-pole position. Expression (2) is the equation used for the calculation performed in the frequency compensating unit 24.

[Math. 2]

$$\omega = 2 \times \pi \times f - K \times I\delta \qquad (2)$$

Here, the angular velocity $\omega$ represents the final angular velocity that has been compensated by the frequency compensating unit 24. f is an inverter output frequency determined in accordance with the command for the compressor rotation speed. K is a proportional gain for the amount of frequency compensation with respect to the torque component current $I\delta$.

Although the angular velocity $\omega$ can follow a torque variation with an enhanced sensitivity as the frequency compensation gain K increases, too large a value for the frequency compensation gain K causes unstable control. Thus the most suitable value is determined in advance. Values of the frequency compensation gain K may be maintained in a table stored in a device such as a microcomputer so that the most suitable values are obtained for various operation patterns. In addition, although a value obtained using the coordinate conversion is used here for the torque component current $I\delta$, a filtration process may be performed, so that only a component having a certain time constant is effective.

In the voltage command calculating unit 25, a new term is added to the motor voltage equation for the feedback of an error $\Phi err$ in the magnetic flux that is a difference between a magnetic-flux command value $\Phi_*$ and a calculated primary magnetic flux $\Phi$ so that a total magnetic flux generated in the motor 30 is equal to a predetermined reference value on the $\gamma$-axis. Then, voltage command values $V\gamma_*$ and $V\delta_*$ that are to be generated on the $\gamma$- and $\delta$- axes are obtained. The calculation is performed using the magnetic-flux command value $\Phi_*$ for the primary magnetic flux generated in the motor 30, $I\gamma$ and $I\delta$ obtained by the aforementioned operation, resistance and inductance components and an induced voltage constant of the motor 30, and the angular velocity $\omega$. Here, the resistance and inductance components, the induced voltage constant, and other parameters of the motor 30 are intrinsic values that are measured in advance, and the measured values are maintained in a microcomputer, for example.

In the Example, the magnetic-flux vector control is performed so as to maintain the magnetic flux at a certain constant value on the $\gamma$-axis. The magnetic-flux command values $\Phi_*$ that provide the most efficient operating condition of the motor 30 are measured in advance and maintained in a table, which enables efficient driving of the motor 30.

For example, the torque component current $I\delta$ is adopted as an input for tabulation, and the most suitable magnetic-flux command value $\Phi_*$ for each torque component current $I\delta$ is determined and maintained. The rotation speed of the motor 30 may be adopted as the input for tabulation, and the most suitable magnetic-flux command value $\Phi_*$ for the motor 30 is determined and maintained. To further simplify the calculation, the magnetic-flux vector control may be configured by using $I\gamma$ as a command value to approximate the calculation based on the magnetic-flux command value $\Phi_*$.

In the Example, a configuration in which the most suitable values of the command values for Iy are maintained in advance in the $\gamma$-axis current command table 23 will be described as an example (detailed operation of the current correcting unit 27, which corrects the $\gamma$-axis current command value $I\gamma_*$, will be described below).

The inverse coordinate conversion unit 28 converts a direct-current value on the two axes into three-phase alternating-current values in accordance with the voltage command values on the $\gamma$- and $\delta$-axes obtained by the voltage command calculating unit 25 and obtains voltage command values $Vu_*$, $Vv_*$, and $Vw_*$ of three-phase alternating current. The phase $\theta$ used in the inverse coordinate conversion unit 28 is the same phase $\theta$ as used in the coordinate conversion unit 20. Because the voltage command values $Vu_*$, $Vv_*$, and $Vw_*$ are three-phase sinusoidal voltage signals, these values become PWM (Pulse Width Modulation) signals to switch on and off the IGBT devices of the inverter circuit 11. The gate driving circuit 14 amplifies PWM signals generated in accordance with $Vu_*$, $Vv_*$, and $Vw_*$, obtains signals of approximately $\pm 15$ V, and applies each of the voltages between the gate and the emitter of a corresponding one of the IGBT devices to drive the gate of the corresponding IGBT device of the inverter circuit 11.

In the Example, the primary magnetic flux of the motor 30 is controlled to be maintained at a predetermined constant value and on the $\gamma$-axis using the aforementioned configuration, so that the compressor 29 can be driven at a rotation speed such as to obtain a required refrigeration capacity. In this way, the rotation speed of the motor 30 can be controlled without using a magnetic-pole position sensor for the permanent magnet synchronous motor.

Next, operation of the load-torque detecting unit 26 will be described. As described above, with an increase in the load torque, the torque component current $I\delta$ increases. This indicates that a state of the load torque can be detected by $I\delta$. In the case that $I\delta$ exceeds a predetermined value, the motor 30 is controlled to avoid going out of synchronization by increasing the current from the command value determined by the $\gamma$-axis current command table 23 described above, that is, by increasing $I\gamma$.

The threshold for $I\delta$ is determined so that the current correcting unit 27 remains inactive in a normal operation range of the compressor 29 and is activated when load torque increases outside the operation range of the compressor 29.

The threshold for Iδ thus determined does not cause the command values in the γ-axis current command table 23 to be corrected while the compressor 29 remains in the normal operation range. Thus, the air-conditioning apparatus 100 maintains high-efficiency operation while the compressor 29 remains in the normal operation range, and avoids an out-of-synchronization state only in the case of operation under a high load-torque condition such as the case in which the refrigerant flows in the reverse direction. The air-conditioning apparatus 100 continues to operate in this way.

Overload operation in which the load torque of the motor 30 reaches a maximum, for example, is included in the normal operation range of the compressor 29. Conditions outside the operation range of the compressor 29 include the case in which the refrigerant flows in the reverse direction and is suctioned by the compressor 29, for example.

The threshold for Iδ may be variable and configured to be determined by the amount of variation in Iδ. In this way, early detection of a tendency toward an increase in the load torque can be performed in advance with noise or the like detected in error, and the compressor 29 can be operated in the normal operation range.

Hereinafter, a method of detecting an increase in the load torque on the basis of the amount of variation in Iδ will be described. The present control is performed by a device such as a microcomputer, for example, which determines the amount of variation in Iδ by calculating Iδ in every control cycle, storing in a memory the detected value of Iδ that is currently detected and the preceding value in every sampling period, and calculating a difference between the two as indicated by Expression (3).

[Math. 3]

$$\text{amount of variation in } I\delta = \text{currently detected value of } I\delta - \text{preceding value} \quad (3)$$

Fig. 3 is a conceptual diagram illustrating an example of determination of a threshold for the load-torque detecting unit 26 in the motor control device 200 of the Example useful to explain the present invention. The horizontal axis of Fig. 3 represents time, and the vertical axis of Fig. 3 represents the torque component current Iδ.

During normal operation of the air-conditioning apparatus 100, when the following two conditions (4) and (5) hold true simultaneously or either of the conditions is satisfied, the current correcting unit 27 is activated determining that the load torque outside the operation range of the compressor 29 is generated.

[Math. 4]

$$\text{currently detected value of } I\delta > \text{threshold A} \quad (4)$$

[Math. 5]

$$\text{amount of variation in } I\delta > \text{threshold B} \quad (5)$$

Threshold A is set at a value equal to or larger than a maximum value of Iδ in the normal operation range of the compressor 29. Threshold B is set at a value equal to or larger than a maximum amount of variation in the torque component current Iδ generated by torque ripples of the motor 30 in the normal operation range. The values of threshold A and threshold B are predetermined, for example, by performing test operation in advance using an actual apparatus and measuring each value. The amount of variation in the torque component current Iδ is obtained by calculating a difference between detected values per sampling period, which are detected as described above by the microcomputer, for example. Threshold B for the amount of variation is set to a positive value because it is commonly known that the torque component current Iδ increases with an increase in the load torque of the motor 30.

Next, the current correcting unit 27 will be described. The current correcting unit 27 increases the current flowing through the motor 30 with an increase in the load torque detected by the load-torque detecting unit 26. The current correcting unit 27 operates so as to further increase the current command value from the current command value based on the γ-axis current command table 23 in the situation in which the load torque detected by the load-torque detecting unit 26 is outside the normal operation range of the compressor 29. An increase in the current command value is achieved, for example, by adding a predetermined constant current command value in every control cycle. When the load torque of the motor 30 stops increasing and Iδ ceases to satisfy at least one of the conditions (4) and (5), for example, the current correcting unit 27 controls the current command value that has been increased to decrease to the previous Iγ current command value obtained from the γ-axis current command table 23.

Even if the load torque increases rapidly because of an occurrence of reverse refrigerant flow in which the liquefied refrigerant is suctioned by the compressor 29 in a low outdoor-air condition, for example, the motor control device 200 of Embodiment 1 of the present invention can increase the γ-axis current command value, thereby increasing the current flowing through the motor 30, which heats the motor 30, and the liquefied refrigerant in the compressor 29 can be vaporized.

In the case of a locking failure occurrence in which the rotation shaft is locked because of malfunction of the motor 30 for some reason, an excessive current may flow through the motor 30, resulting in a high temperature of the stator windings of the motor 30. Particularly, if the motor 30 is subjected to the locking failure in a low rotation speed region of the compressor 29, it is possible that the operation continues in a current range in which an inverter output voltage applied to the motor 30 is too small to activate the overcurrent protecting unit 15. As a result, the temperature of the stator windings may be higher than or equal to an allowable limit because of prolonged continuous operation.

According to the Example, however, the motor control device 200 that controls the motor 30 includes the load-torque detecting unit 26 that detects the load torque of the motor 30 and the current correcting unit 27 that controls the current flowing through the motor 30 in accordance with the information detected by the load-torque detecting unit 26, and the current correcting unit 27 increases the current flowing through the motor 30 in accordance with the increase in the load torque detected by the load-torque detecting unit 26. Thus, in the case of the motor-locking failure in the low rotation speed region of the compressor 29, the load-torque detecting unit 26 detects the locking state at an early stage, and the current correcting unit 27 is activated and increases the current flowing through the motor 30, increasing the γ-axis current and activating the overcurrent protecting unit 15. Thus, the air-conditioning apparatus 100 can be stopped safely before the temperature increase of the stator windings exceeds the allowable limit for the windings. Consequently, the motor 30 is capable of continuing operation by avoiding going out of synchronization in the case of the increase in the load torque of the motor 30.

In the Example, although the magnetic-flux vector control has been described as an example of the position-sensorless control of the permanent magnet synchronous motor, other position-sensorless control may be adopted, and the command value for each current may be corrected when the load-torque detecting unit 26 detects the load torque outside the normal operation range of the compressor 29. The motor 30 is also capable of continuing operation by avoiding going out of synchronization in the case of the increase in the load torque of the motor 30.

In addition, in the case that the load torque increases rapidly due to the occurrence of the reverse refrigerant flow in which the liquefied refrigerant is suctioned by the compressor 29 in a low outdoor-air condition, for example, the increase in the γ-axis current command value causes an excessive current to flow through the motor 30, and the motor 30 is heated. Thus, the reverse refrigerant flow can be suppressed, and the air-conditioning apparatus 100 can be stopped in the case of locking failure of the motor 30.

Embodiment of the invention

In Embodiment , which differs from the Example, a load-torque detecting unit 26 employs a root-mean-square value calculating unit 26a, an unbalancing calculating unit 26b, and a power factor calculating unit 26c in place of Iδ obtained using the coordinate conversion. For an air-conditioning apparatus 100 of the Embodiment , configurations and operation that differ from those in the Example will be described, and the same components as those in the air-conditioning apparatus 100 of the Example will be denoted by the same numerals or symbols.

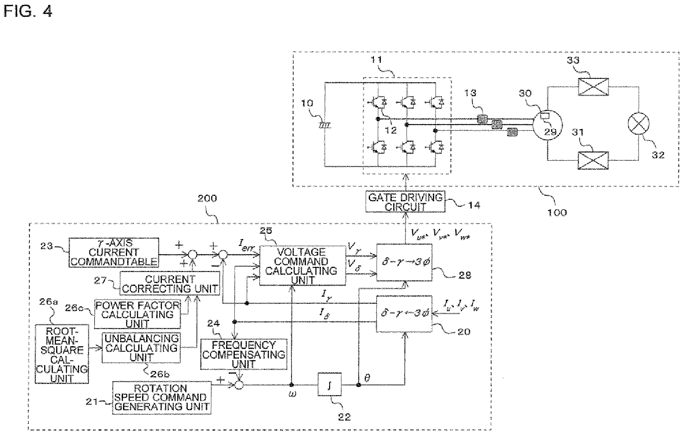

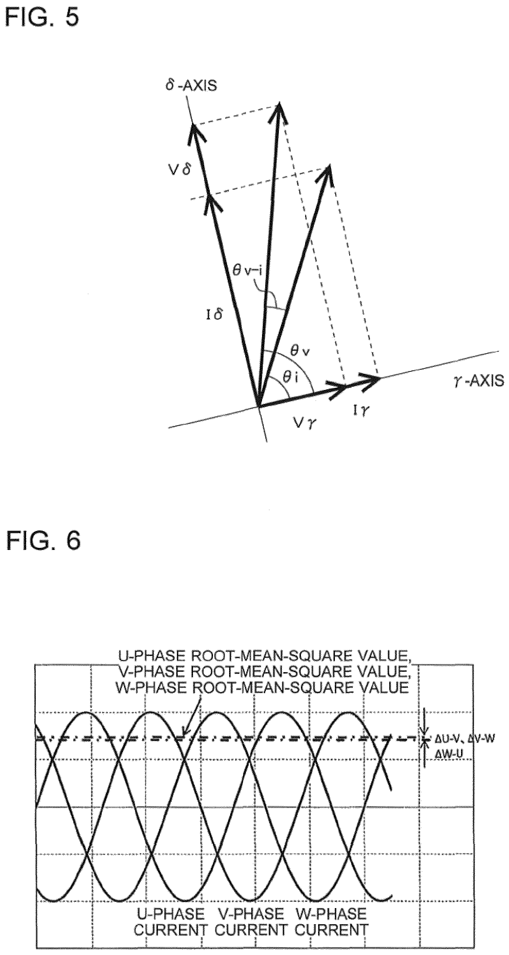

Fig. 4 is a schematic diagram illustrating a circuit configuration and a control block diagram of an air-conditioning apparatus 100 and a motor control device 200 of the Embodiment of the present invention. Fig. 5 is a vector diagram of a configuration of magnetic-flux vector control by the motor control device 200 of the Embodiment of the present invention. As illustrated in Fig. 4, the motor control device 200 includes the root-mean-square value calculating unit 26a, the unbalancing calculating unit 26b, and the power factor calculating unit 26c.

The root-mean-square value calculating unit 26a calculates a root-mean-square (RMS) value of each phase current of the motor 30. As is well known, the formula for calculating the root-mean-square value is given by averaging the square of an alternating current over one cycle followed by calculating the square root of the averaged value. When the average is calculated over one cycle of the alternating current, values sampled at every control cycle of the microcomputer can be used for approximate calculation. Alternatively, it is known that a root-mean-square value can be calculated by dividing an instantaneous peak value by √2 for a sinusoidal-wave alternating current, and the root-mean-square value of current may be derived by using this formula from an instantaneous peak value obtained in one cycle, on which peak-hold operation is performed.

The unbalancing calculating unit 26b calculates an unbalanced value by calculating a difference in the root-mean-square value between individual phase currents that flow through the motor 30. The root-mean-square values of phase currents are calculated by the root-mean-square value calculating unit 26a. An example of the calculation method is described as follows.

$$\Delta U - V = Iu \text{ (root-mean-square value)} - Iv \text{ (root-mean-square value)}$$

$$\Delta V - W = Iv \text{ (root-mean-square value)} - Iw \text{ (root-mean-square value)}$$

$$\Delta W - U = Iw \text{ (root-mean-square value)} - Iu \text{ (root-mean-square value)}$$

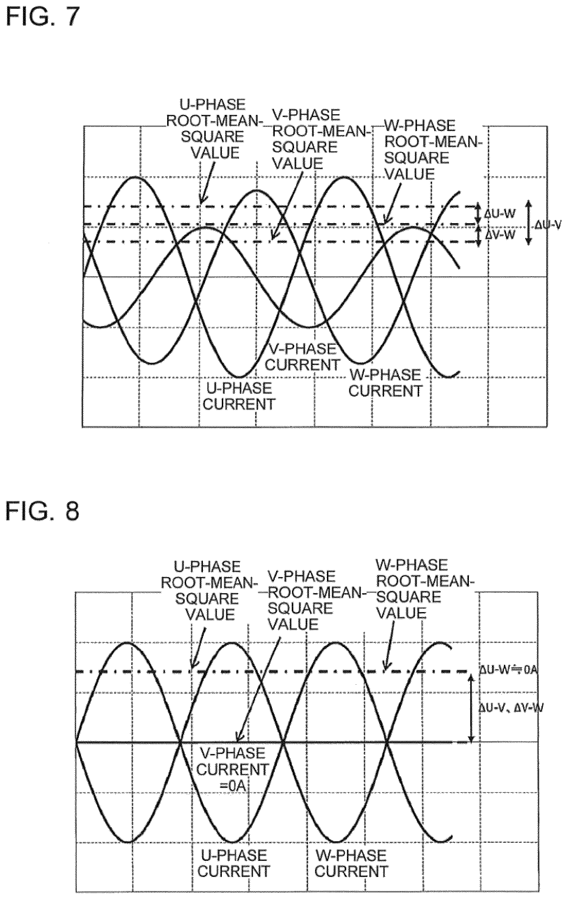

Because the root-mean-square values of three-phase currents are balanced during normal operation of the compressor 29 as illustrated in Fig. 6, $\Delta U$ - V, $\Delta V$ - W, and $\Delta W$ - U are substantially 0 A. In the case that the motor 30 is locked, for example, the balance of inductance between the phases becomes disrupted, and the three-phase alternating currents of the motor 30 become unbalanced (Fig. 7). In addition, the unbalanced values of the root-mean-square values of phase currents further increase during open-phase operation in which stator windings or wirings connecting the motor 30 and the inverter circuit 11, for example, are disconnected (Fig. 8).

The power factor calculating unit 26c calculates a power factor of the motor 30. An increase in the load torque of the motor 30 and a state of the motor 30 when locked are detected based on an instantaneous current value of the motor 30, unbalanced values of the root-mean-square values of phase currents, and a phase difference between the voltage and the current, that is, the power factor of the motor 30.

When any one of the differences in the root-mean-square value $\Delta U$ - V, $\Delta V$ - W, and $\Delta W$ - U between the individual phase currents, which are calculated by the unbalancing calculating unit 26b, is larger than a predetermined first reference value, for example, the current correcting unit 27 determines that the motor 30 is malfunctioning with the load torque of the motor 30 increased and avoids an out-of-synchronization state of the motor 30 by controlling the motor 30 so as to increase the $\gamma$-axis current command value. Because the root-mean-square values of phase currents do not usually balance out among three phases owing to noise or a degree of current distortion, $\Delta U$ - V, $\Delta V$ - W, and $\Delta W$ - U sometimes deviate from zero even under the normal condition of the motor 30. Thus, the first reference value is set to a value larger than the differences in the root-mean-square value between the individual phase currents in the normal operation range of the motor 30, which are measured in advance, for example, in test operation using the actual apparatus. In addition, measuring at the same time unbalanced values of the root-mean-square values of phase currents in the case that the motor 30 is actually locked enables determination of the threshold for more certain detection of malfunctioning.

When the power factor calculated by the power factor calculating unit 26c is smaller than or equal to a second reference value, for example, the current correcting unit 27 determines that the motor 30 is malfunctioning with the load torque of the motor 30 increased and avoids an out-of-synchronization state of the motor 30 by controlling the motor 30 so as to increase the $\gamma$-axis current command value.

Here, the second reference value is smaller than or equal to a minimum power factor in the normal operation range of the motor 30, which is measured in advance, for example, in test operation using the actual apparatus. It is known that the power factor degrades when the motor 30 is subjected to a locking failure, for example. Thus, the configuration such as in the Embodiment enables more certain detection of a rapid variation in the load torque of the compressor 29 or a failure state of the motor 30.

Next, according to the Embodiment, a derivation of the power factor from I$\gamma$, I$\delta$, V$\gamma$, and V$\delta$ calculated by the motor control device 200 will be described. The power factor can be derived from a phase difference between the voltage applied to the motor 30 and the current.

Because the voltage applied to the motor 30 is a vector sum of V$\gamma$ and V$\delta$, a device such as a microcomputer can be used to calculate a phase difference $\theta$v of the vector sum of the voltages with respect to the $\gamma$- and $\delta$-axes. In addition, in the magnetic-flux vector control of the Embodiment, because the $\gamma$-axis and the $\delta$-axis are orthogonal to each other, the vector sum of V$\gamma$ and V$\delta$ can be determined in accordance with the Pythagorean theorem, and the phase difference of the voltage vector can be obtained by Expression (6) (Fig. 5).
[Math. 6]

$$\theta v = Tan^{-1}(V\delta/V\gamma) \qquad (6)$$

The current flowing through the motor 30 can also be derived from a vector sum of the currents I$\gamma$ and I$\delta$. Thus, the phase difference of the current vector can be obtained by Expression (7) in a manner similar to the above description of the phase difference of the voltage vector.
[Math. 7]

$$\theta i = Tan^{-1}(I\delta/I\gamma) \qquad (7)$$

Given $\theta$v-i as the phase difference between $\theta$v and $\theta$i, which are obtained by Expressions (6) and (7) above, the power factor is determined as COS($\theta$v-i).

The current flowing through the motor 30 may be controlled using the unbalancing calculating unit 26b that calculates unbalancing between the root-mean-square values of phase currents of the compressor 29 and the power factor calculating unit 26c that calculates the power factor of the motor 30. Specifically, for example, when the unbalanced value of the root-mean-square values of phase currents, which is calculated by the unbalancing calculating unit 26b, is larger than the predetermined first reference value, or when the power factor calculated by the power factor calculating unit 26c is smaller than or equal to the second reference value, the current correcting unit 27 may determine that the motor 30 is malfunctioning and avoid an out-of-synchronization state of the motor 30 by controlling the motor 30 so as to increase the $\gamma$-axis current command value.

When the condition for activating the current correcting unit 27 ceases to be satisfied, for example, the motor control device 200 determines that the motor 30 has returned to normal rotation. In the case of detecting with more certainty that the motor 30 has returned to normal rotation, the motor control device 200 determines that the motor 30 has returned to normal rotation, for example, when the value calculated by the root-mean-square value calculating unit 26a becomes smaller than or equal to a predetermined value. Then, when the motor 30 returns to normal rotation, the current correcting unit 27 decreases the increased $\gamma$-axis current command value to the normal current command value.

As described above, according to the Embodiment, the load-torque detecting unit 26 further includes the root-mean-square value calculating unit 26a that calculates the root-mean-square value of current of the motor 30 and the unbalancing calculating unit 26b that calculates the unbalanced value of the root-mean-square values of three-phase currents calculated by the root-mean-square value calculating unit 26a. Then, the current correcting unit 27 increases the current flowing through the motor 30, determining that the load torque has increased when the unbalanced value calculated by the unbalancing calculating unit 26b is larger than the first reference value. Thus, the motor 30 can avoid going out of synchronization in the case of a rapid change in the load torque of the motor 30, and even when the motor 30 is malfunctioning for some reason, increasing the $\gamma$-axis current enables early activation of the overcurrent protecting unit 15 and a safe halt of the air-conditioning apparatus 100. In this way, reliability of the apparatus can be ensured.

According to the Embodiment, the load-torque detecting unit 26 further includes the power factor calculating unit 26c that calculates the power factor of the motor 30, and the current correcting unit 27 increases the current flowing through the motor 30, determining that the load torque has increased when the power factor of the motor 30 calculated by the power factor calculating unit 26c is smaller than or equal to the second reference value. Thus, the motor 30 can avoid going out of synchronization in the case of a rapid change in the load torque of the motor 30, and even when the motor 30 is malfunctioning for some reason, increasing the $\gamma$-axis current enables early activation of the overcurrent protecting unit 15 and a safe halt of the air-conditioning apparatus 100. In this way, reliability of the apparatus can be ensured.

According to the Embodiment, the load-torque detecting unit 26 further includes the root-mean-square value calculating unit 26a that calculates the root-mean-square value of current of the motor 30, the unbalancing calculating unit 26b that calculates the unbalanced value of the root-mean-square values of three-phase currents calculated by the root-mean-square value calculating unit 26a, and the power factor calculating unit 26c that calculates the power factor of the motor 30. Then, the current correcting unit 27 increases the current flowing through the motor 30, determining that the load torque has increased when the unbalanced value calculated by the unbalancing calculating unit 26b is larger than the first reference value, or when the power factor of the motor 30 calculated by the power factor calculating unit 26c is smaller than or equal to the second reference value. Thus, the motor 30 can avoid going out of synchronization in the case of a rapid change in the load torque of the motor 30, and even when the motor 30 is malfunctioning for some reason, increasing the $\gamma$-axis current enables early activation of the overcurrent protecting unit 15 and a safe halt of the air-conditioning apparatus. In this way, reliability of the apparatus can be ensured.

Reference Signs List

10 smoothing capacitor 11 inverter circuit 12 switching device 13 current detecting unit 14 gate driving circuit 15 overcurrent protecting unit 20 coordinate conversion unit 21 rotation speed command generating unit 22 integrating unit 23 $\gamma$-axis current table 24 frequency compensating unit 25 voltage command calculating unit 26 load-torque detecting unit 26a root-mean-square value calculating unit 26b unbalancing calculating unit 26c power factor calculating unit 27 current correcting unit 28 inverse coordinate conversion unit 29 compressor 30 motor 31 condenser 32 pressure reducing unit 33 evaporator 100 air-conditioning apparatus 200 motor control device

**Claims**

1. A motor control device (200) controlling a motor (30), comprising:

    a load-torque detecting unit (26) configured to detect load torque of the motor (30); and
    a current correcting unit (27) configured to increase a current flowing through the motor (30) in accordance with an increase in the load torque detected by the load-torque detecting unit (26),
    the load-torque detecting unit (26) including

        a power factor calculating unit (26c) configured to calculate a power factor of the motor (30),

the current correcting unit (27) increasing the current flowing through the motor (30),

the motor control device (20) **characterized by** the current correcting unit (27) determining that the load torque has increased when the power factor of the motor (30) calculated by the power factor calculating unit (26c) is smaller than or equal to a reference value.

2. A motor control device (200) controlling a motor (30), comprising:

a load-torque detecting unit (26) configured to detect load torque of the motor (30); and
a current correcting unit (27) configured to increase a current flowing through the motor (30) in accordance with an increase in the load torque detected by the load-torque detecting unit (26),

the motor control device (20) **characterized by** the load-torque detecting unit (26) including
a root-mean-square value calculating unit (26a) configured to calculate a root-mean-square value of each of the three-phase currents of the motor (30), and
an unbalancing calculating unit (26b) configured to calculate an unbalanced value by calculating a difference in the root-mean-square value between individual phase currents that flow through the motor (30) calculated by the root-mean-square value calculating unit (26a),

the current correcting unit (27) increasing the current flowing through the motor (30), determining that the load torque has increased when the unbalanced value calculated by the unbalancing calculating unit (26b) is larger than a reference value.

3. The motor control device (200) of claim 1, wherein
the load-torque detecting unit (26) includes

a root-mean-square value calculating unit (26a) configured to calculate a root-mean-square value of each of three-phase currents of the motor (30), and
an unbalancing calculating unit (26b) configured to calculate an unbalanced value by calculating a difference in the root-mean-square value between individual phase currents that flow through the motor (30) calculated by the root-mean-square value calculating unit (26a), and
the current correcting unit (27) increases the current flowing through the motor (30), determining that the load torque has increased when the unbalanced value calculated by the unbalancing calculating unit (26b) is larger than a reference value.

4. The motor control device (200) of any one of claim 1 to 3, comprising:
a position-sensorless control unit configured to control a total magnetic flux in the motor (30) to be maintained at a reference value.

5. A compressor (29) comprising:
the motor (30) controlled by the motor control device (200) of any one of claims 1 to 4.

6. An air-conditioning apparatus (100) comprising:

the compressor (29) of claim 5;
a current detecting unit (13) configured to detect a current of the motor (30); and
an overcurrent protecting unit (15) configured to stop the motor control device (200) when the current detected by the current detecting unit (13) is larger than or equal to a reference current.

7. An air-conditioning apparatus (100) comprising:

the compressor (29) of claim 5;
a smoothing capacitor (10) configured to smooth a rectified direct-current voltage rectified from a voltage from a three-phase alternating-current power source; and
an inverter circuit (11) configured to convert the direct-current voltage smoothed by the smoothing capacitor (10) into an alternating-current voltage.

8. The air-conditioning apparatus (100) of claim 7, wherein

a switching device of the inverter circuit (11) includes
a device made of silicon carbide, a device made of gallium nitride-based or related materials, or a device made of diamond.

9. An air-conditioning apparatus (100) comprising:
a refrigeration cycle circuit including the compressor (29) of claim 5, a condenser (31), a pressure reducing unit (32), an evaporator (33), and a refrigerant pipe connecting the compressor (29), the condenser (31), the pressure reducing unit (32), and the evaporator (33) to each other.

**Patentansprüche**

1. Motorsteuerungsvorrichtung (200), die einen Motor (30) steuert, umfassend:

eine Lastmoment-Erfassungseinheit (26), die eingerichtet ist, das Lastmoment des Motors (30) zu erfassen; und eine Stromkorrektureinheit (27), die eingerichtet ist, einen durch den Motor (30) fließenden Strom in Übereinstimmung mit einem Anstieg des von der Lastmoment-Erfassungseinheit (26) erfassten Lastmoments zu erhöhen,
wobei die Last-Drehmoment-Erfassungseinheit (26) umfasst
eine Leistungsfaktor-Berechnungseinheit (26c), die eingerichtet ist, einen Leistungsfaktor des Motors (30) zu berechnen,
wobei die Stromkorrektureinheit (27) den durch den Motor (30) fließenden Strom erhöht,
die Motorsteuerungsvorrichtung (20) **dadurch gekennzeichnet ist, dass** die Stromkorrektureinheit (27) feststellt, dass das Lastmoment angestiegen ist, wenn der von der Leistungsfaktorberechnungseinheit (26c) berechnete Leistungsfaktor des Motors (30) kleiner oder gleich einem Referenzwert ist.

2. Motorsteuerungsvorrichtung (200), die einen Motor (30) steuert, umfassend:

eine Lastmoment-Erfassungseinheit (26), die eingerichtet ist, das Lastmoment des Motors (30) zu erfassen; und eine Stromkorrektureinheit (27), die eingerichtet ist, einen durch den Motor (30) fließenden Strom in Übereinstimmung mit einem Anstieg des von der Lastmoment-Erfassungseinheit (26) erfassten Lastmoments zu erhöhen,
wobei die Motorsteuerungsvorrichtung (20) **dadurch gekennzeichnet ist, dass** die Lastmoment-Erfassungseinheit (26) umfasst

eine Quadratischer-Mittelwert-Berechnungseinheit (26a), die eingerichtet ist, einen quadratischen Mittelwert von jedem der Dreiphasenströme des Motors (30) zu berechnen, und
eine Unsymmetrieberechnungseinheit (26b), die eingerichtet ist, einen Unsymmetriewert zu berechnen, indem sie eine Differenz im quadratischen Mittelwert zwischen einzelnen Phasenströmen berechnet, die durch den Motor (30) fließen, der von der Quadratischer-Mittelwert-Berechnungseinheit (26a) berechnet wurde,

wobei die Stromkorrektureinheit (27) den durch den Motor (30) fließenden Strom erhöht, bestimmend, dass das Lastmoment angestiegen ist, wenn der von der Unsymmetrieberechnungseinheit (26b) berechnete Unsymmetriewert größer als ein Referenzwert ist.

3. Motorsteuerungsvorrichtung (200) nach Anspruch 1, wobei
die Last-Drehmoment-Erfassungseinheit (26) umfasst

eine Quadratischer-Mittelwert-Berechnungseinheit (26a), die eingerichtet ist, einen quadratischen Mittelwert von jedem der Dreiphasenströme des Motors (30) zu berechnen, und
eine Unsymmetrieberechnungseinheit (26b), die eingerichtet ist, einen Unsymmetriewert zu berechnen, indem sie eine Differenz im quadratischen Mittelwert zwischen einzelnen Phasenströmen berechnet, die durch den Motor (30) fließen, der von der Quadratischer-Mittelwert-Berechnungseinheit (26a) berechnet wurde, und
die Stromkorrektureinheit (27) erhöht den durch den Motor (30) fließenden Strom, bestimmend, dass sich das Lastmoment erhöht hat, wenn der von der Unsymmetrieberechnungseinheit (26b) berechnete Unsymmetriewert größer als ein Referenzwert ist.

**4.** Motorsteuerungsvorrichtung (200) nach einem der Ansprüche 1 bis 3, umfassend:
eine lagesensorlose Steuerung, die eingerichtet ist, einen Gesamtmagnetfluss im Motor (30) so zu steuern, dass er auf einem Referenzwert gehalten wird.

**5.** Kompressor (29), umfassend:
den Motor (30), der von der Motorsteuerungsvorrichtung (200) nach einem der Ansprüche 1 bis 4 gesteuert wird.

**6.** Klimaanlage (100), umfassend:

den Kompressor (29) nach Anspruch 5;
eine Stromerfassungseinheit (13), die eingerichtet ist, einen Strom des Motors (30) zu erfassen; und
eine Überstrom-Schutzeinheit (15), die eingerichtet ist, die Motorsteuerungsvorrichtung (200) anzuhalten, wenn der von der Stromerfassungseinheit (13) erfasste Strom größer als oder gleich einem Referenzstrom ist.

**7.** Klimaanlage (100), umfassend:

den Kompressor (29) nach Anspruch 5;
einen Glättungskondensator (10), der eingerichtet ist, eine gleichgerichtete Gleichspannung zu glätten, die aus einer Spannung von einer dreiphasigen Wechselstromquelle gleichgerichtet wird; und
eine Wechselrichterschaltung (11), die eingerichtet ist, die durch den Glättungskondensator (10) geglättete Gleichspannung in eine Wechselspannung umzuwandeln.

**8.** Klimaanlage (100) nach Anspruch 7, wobei

eine Schaltvorrichtung der Wechselrichterschaltung (11) umfasst
eine Vorrichtung aus Siliziumkarbid, eine Vorrichtung aus Galliumnitrid oder verwandten Materialien oder eine Vorrichtung aus Diamant.

**9.** Klimaanlage (100), umfassend:
einen Kältekreislauf, der den Kompressor (29) nach Anspruch 5, einen Kondensator (31), eine Druckreduziereinheit (32), einen Verdampfer (33) und eine Kältemittelleitung, die den Kompressor (29), den Kondensator (31), die Druckreduziereinheit (32) und den Verdampfer (33) miteinander verbindet, enthält.

**Revendications**

**1.** Dispositif de commande de moteur (200) commandant un moteur (30), comprenant :

une unité de détection de couple de charge (26) configurée pour détecter un couple de charge du moteur (30) ; et
une unité de correction de courant (27) configurée pour augmenter un courant circulant dans le moteur (30) en fonction d'une augmentation du couple de charge détecté par l'unité de détection de couple de charge (26), l'unité de détection de couple de charge (26) incluant
une unité de calcul de facteur de puissance (26c) configurée pour calculer un facteur de puissance du moteur (30),
l'unité de correction de courant (27) augmentant le courant circulant à travers le moteur (30),
le dispositif de commande de moteur (20) **caractérisé par** l'unité de correction de courant (27) déterminant que le couple de charge a augmenté lorsque le facteur de puissance du moteur (30) calculé par l'unité de calcul de facteur de puissance (26c) est inférieur ou égal à une valeur de référence.

**2.** Dispositif de commande de moteur (200) commandant un moteur (30), comprenant :

une unité de détection de couple de charge (26) configurée pour détecter un couple de charge du moteur (30) ; et
une unité de correction de courant (27) configurée pour augmenter un courant circulant dans le moteur (30) en fonction d'une augmentation du couple de charge détecté par l'unité de détection de couple de charge (26),
le dispositif de commande de moteur (20) **caractérisé par** l'unité de détection de couple de charge (26) incluant

une unité de calcul de valeur quadratique moyenne (26a) configurée pour calculer une valeur quadratique moyenne de chacun des courants triphasés du moteur (30), et

une unité de calcul de déséquilibre (26b) configurée pour calculer une valeur de déséquilibre en calculant une différence dans la valeur quadratique moyenne entre des courants de phase individuels qui circulent à travers le moteur (30) calculée par l'unité de calcul de valeur quadratique moyenne (26a),

l'unité de correction de courant (27) augmentant le courant circulant à travers le moteur (30), en déterminant que le couple de charge a augmenté lorsque la valeur de déséquilibre calculée par l'unité de calcul de déséquilibre (26b) est supérieure à une valeur de référence.

3. Dispositif de commande de moteur (200) selon la revendication 1, dans lequel l'unité de détection de couple de charge (26) inclut

une unité de calcul de valeur quadratique moyenne (26a) configurée pour calculer une valeur quadratique moyenne de chacun des courants triphasés du moteur (30), et
une unité de calcul de déséquilibre (26b) configurée pour calculer une valeur de déséquilibre en calculant une différence dans la valeur quadratique moyenne entre des courants de phase individuels qui circulent à travers le moteur (30) calculée par l'unité de calcul de valeur quadratique moyenne (26a), et
l'unité de correction de courant (27) augmente le courant circulant à travers le moteur (30), en déterminant que le couple de charge a augmenté lorsque la valeur de déséquilibre calculée par l'unité de calcul de déséquilibre (26b) est supérieure à une valeur de référence.

4. Dispositif de commande de moteur (200) selon l'une quelconque des revendications 1 à 3, comprenant :
une unité de commande sans capteur de position configurée pour commander un flux magnétique total dans le moteur (30) à maintenir à une valeur de référence.

5. Compresseur (29), comprenant :
le moteur (30) commandé par le dispositif de commande de moteur (200) selon l'une quelconque des revendications 1 à 4.

6. Appareil de climatisation (100), comprenant :

le compresseur (29) selon la revendication 5 ;
une unité de détection de courant (13) configurée pour détecter un courant du moteur (30) ; et
une unité de protection contre les surintensités (15) configurée pour arrêter le dispositif de commande de moteur (200) lorsque le courant détecté par l'unité de détection de courant (13) est supérieur ou égal à un courant de référence.

7. Appareil de climatisation (100), comprenant :

le compresseur (29) selon la revendication 5 ;
un condensateur de lissage (10) configuré pour lisser une tension de courant continu redressée à partir d'une tension provenant d'une source d'alimentation en courant alternatif triphasé ; et
un circuit onduleur (11) configuré pour convertir la tension de courant continu lissée par le condensateur de lissage (10) en une tension de courant alternatif.

8. Appareil de climatisation (100) selon la revendication 7, dans lequel

un dispositif de commutation du circuit onduleur (11) inclut
un dispositif réalisé en carbure de silicium, un dispositif réalisé en matériaux à base de nitrure de gallium ou apparentés, ou un dispositif réalisé en diamant.

9. Appareil de climatisation (100), comprenant :
un circuit de cycle de réfrigération comprenant le compresseur (29) selon la revendication 5, un condenseur (31), une unité de réduction de pression (32), un évaporateur (33) et un tuyau de fluide frigorigène reliant le compresseur (29), le condenseur (31), l'unité de réduction de pression (32) et l'évaporateur (33) les uns aux autres.

FIG. 1

FIG. 2

FIG. 3

FIG. 4

FIG. 5

FIG. 6

## FIG. 7

## FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003259680 A
- EP 2490328 A2

- US 20140084825 A1